# FASCICULE DE BREVET EUROPEEN

(11) **EP 3 922 825 B1**
(45) Date de publication et mention de la délivrance du brevet: **02.07.2025**
(21) Numéro de dépôt: 21175676.2
(22) Date de dépôt: 25.05.2021
(51) Int. Cl.: F02B 29/04, F02B 37/00, F02M 26/05, F02M 26/22, F02M 26/28, F02M 26/32, F02M 26/30

(54) **MOTEUR THERMIQUE AVEC CIRCUIT DE REFROIDISSEMENT POUR MODULE DOUBLE FLUX**
BRENNKRAFTMASCHINE MIT EINEM KÜHLKREIS FÜR DOPPELSTROMMODUL
ENGINE WITH COOLING CIRCUIT FOR A DUAL-FLOW MODULE

(30) Priorité: 10.06.2020 FR 2006041
(43) Date de publication de la demande: 15.12.2021
(73) Titulaire: NEW H POWERTRAIN HOLDING, S.L.U., 47008 Valladolid (ES)
(72) Inventeur: LAVABRE, Guilhem, 92420 vaucresson (FR); SERAFINSKI, Michal, 92210 Saint-CLoud (FR); VENEZIANI, Thomas, 75015 PARIS (FR)
(74) Mandataire: Renault Group

(56) Documents cités:
- EP-A1- 1 561 021
- EP-B1- 1 561 021
- DE-A1- 102007 009 354
- FR-A1- 3 049 312
- FR-A1- 3 079 880
- US-A1- 2010 095 939
- US-A1- 2013 263 797
- US-A1- 2015 167 595

## Description

### Domaine technique de l'invention

La présente invention concerne un moteur à combustion interne de véhicule automobile.

La présente invention concerne plus particulièrement le domaine des systèmes de refroidissement pour moteurs à combustion interne, notamment le refroidissement des gaz d'admission de moteur thermique de véhicule automobile.

Elle concerne plus particulièrement un système de refroidissement pour moteur à combustion interne, ledit système de refroidissement comprenant un échangeur thermique connecté à deux circuits de circulation de gaz à haute température, notamment d'air compressé et de gaz brulés, et dans lequel circule un fluide caloporteur.

### Etat de la technique

De manière connue, un véhicule automobile équipé d'un moteur thermique comprend un circuit d'admission d'air pour amener de l'air frais capté généralement au niveau de la face avant du véhicule puis filtré grâce à un filtre à air, vers le moteur thermique.

Ledit moteur thermique peut également comporter un circuit de recirculation de gaz brulés qui sont captés depuis une ligne d'échappement du moteur, c'est-à-dire en aval des chambres de combustion du moteur, et ramenés vers l'admission du moteur en étant mélangés avec l'air frais.

De manière connue, un moteur thermique peut comprendre un système de suralimentation afin d'accroitre les performances dudit moteur. Le système de suralimentation comprend un étage de compression d'air avant son admission dans le moteur pour être mélangé avec du carburant. Cet étage de compression peut par exemple, être associé avec un étage de turbine pour former ensemble un turbocompresseur ou être un module de compression électrique.

Pour améliorer le rendement dudit moteur thermique, l'air frais est compressé au passage de l'étage de compression, ce qui entraine une augmentation de sa température, ce qui est susceptible de réduire l'efficacité du moteur.

Il est donc connu de faire passer l'air compressé après l'étage de compression et en amont du moteur dans un étage de refroidissement appelé couramment « precooler » qui est formé par un échangeur air-eau. Dans ledit échangeur, l'air circule en contact par exemple dans des tubes logés dans une chambre dans laquelle circule de l'eau de refroidissement provenant d'un circuit de refroidissement du moteur. Le circuit de refroidissement peut passer par exemple au travers du moteur pour refroidir également des parties portées à haute température du moteur comme le carter-cylindres et la culasse, l'eau de refroidissement se chargeant alors de calories, et puis par un radiateur pour permettre une dépose desdites calories et leur évacuation. La circulation de l'eau de refroidissement est effectuée grâce à une pompe à eau entrainée par le moteur thermique ou par une pompe à eau électrique.

La recirculation des gaz brulés vers l'admission a pour but de réduire des rejets de polluants générés par la combustion. Ainsi, des gaz brulés peuvent être ramenés depuis l'échappement c'est-à-dire en aval de la combustion dans les cylindres, vers les conduits d'admission du moteur. Les gaz sont nommés gaz recirculés. Ils sont à haute température et peuvent être refroidis avant d'être réintroduits dans l'admission du moteur. On a différents types de gaz brulés recirculés :
- des gaz recirculés haute pression prélevés depuis le circuit d'échappement en amont selon le sens d'écoulement des gaz de dispositifs de dépollution comme par exemple un catalyseur ou piège à oxyde d'azote (Nox). De manière générale, les gaz brulés recirculés haute pression sont prélevés directement depuis un collecteur d'échappement fixé à une face d'échappement de la culasse, du côté latéral opposé à la face d'admission et sont envoyés ensuite vers les conduits d'admission ou dans le répartiteur d'admission.
- des gaz brulés recirculés basse pression prélevés dans le circuit d'échappement et de manière connue après un dispositif de dépollution. Les gaz brulés recirculés basse pression sont donc prélevés en aval d'un dispositif d'échappement et renvoyés vers l'admission du moteur

De manière connue, les gaz recirculés sont refroidis avant d'être mélangés avec l'air frais ou compressé.

L'invention concerne le refroidissement de l'air compressé et le refroidissement des gaz recirculés.

Le document US2011/0139133 décrit un moteur à combustion interne qui est équipé d'un système de refroidissement particulier. Lors d'un démarrage à froid du moteur, ce système de « refroidissement » est utilisé pour réchauffer le moteur en utilisant la chaleur dégagée par les gaz brûlés.

Pour cela, le système de refroidissement comporte un échangeur de chaleur qui fait circuler un fluide caloporteur autour du circuit de gaz recirculés, ce qui permet au fluide caloporteur de récupérer une partie de la chaleur des gaz brûlés. Le fluide caloporteur circule ensuite autour des cylindres et leur cède une partie de la chaleur récupérée.

Le document FR3079880-A1 propose un échangeur de chaleur pour le refroidissement des gaz recirculés haute pression et un échangeur de chaleur pour le refroidissement de l'air compressé en amont de conduits d'admission du moteur thermique.

Le document propose que les entrées de gaz recirculés et d'air mélangé sont toutes deux tournées vers la face échappement du moteur, ce qui permet d'obtenir un dispositif de refroidissement compact mais moins efficace. De plus, les températures des gaz étant très élevées, notamment la température des gaz brulés recirculés, peuvent engendrer des ébullitions du liquide de refroidissement, ce qui entraine une altération voire une destruction de l'échangeur.

Le document US2015/167595A1 divulgue un moteur avec un échangeur commun pour l'air d'admission et les gaz recirculés.

Le but de l'invention est de remédier à ces problèmes et un des objets de l'invention est une unité de refroidissement d'un moteur thermique de véhicule automobile qui comprend un bloc moteur et deux lignes d'admission d'air et de gaz recirculés qui traversent ladite unité avant l'admission dans le bloc moteur, ladite unité de refroidissement permet un refroidissement optimal de l'air et des gaz recirculés dans un encombrement réduit.

### Présentation de l'invention

La présente invention concerne un moteur thermique selon la revendication 1.

De manière avantageuse, le carter de refroidissement comprend deux branches de circulation de liquide de refroidissement qui sont parallèles et de sens opposé pour proposer un encombrement réduit dudit carter avec une efficacité optimale du refroidissement. En effet, le parcours du liquide de refroidissement permet d'avoir une surface d'échange de chaleur maximale avec l'air ou les gaz chauds avec un encombrement réduit.

La direction de l'écoulement du liquide de refroidissement est parallèle à la circulation des gaz recirculés dans le carter de refroidissement et dans le même sens afin d'obtenir un échange réduit et éviter les problèmes d'ébullition du liquide.

Selon d'autres caractéristiques de l'invention :
- la circulation du liquide de refroidissement passe consécutivement d'un premier étage de refroidissement au second étage de refroidissement.

De manière avantageuse, les deux étages de refroidissement sont parcourus en série par le liquide de refroidissement pour maitriser l'efficacité du refroidissement. Ainsi on peut disposer de manière optimale chaque étage de refroidissement afin d'obtenir la meilleure efficacité de refroidissement pour chaque circuit d'air et de gaz recirculés.
- l'étage de refroidissement des gaz recirculés est disposé en aval selon le sens d'écoulement du liquide de refroidissement dans le carter.

De manière avantageuse, le refroidissement des gaz recirculés suit le refroidissement de l'air frais afin de réduire le différentiel de température entre la température du liquide de refroidissement et la température des gaz recirculés et de contrôler l'ébullition du liquide.
- la première branche de refroidissement de l'air compressé est connectée à la seconde branche de refroidissement des gaz recirculés par une chambre intermédiaire de répartition. De manière avantageuse, le carter comprend une chambre intermédiaire de répartition disposée entre les deux branches de circulation du liquide de refroidissement afin d'homogénéiser la température du liquide entre les deux étages et maitriser le refroidissement.
- la première branche de refroidissement de l'air compressé est connectée à une chambre d'entrée 34a conformée pour arroser la première branche.

De manière avantageuse, l'entrée du liquide de refroidissement se fait par l'intermédiaire d'une chambre d'entrée conformée pour diriger le flux de liquide selon l'axe de la première branche de refroidissement et permettre un arrosage de ladite première branche.
- la seconde branche de refroidissement de gaz recirculés est connectée à une chambre de sortie conformée pour recueillir et diriger vers la sortie le flux de liquide provenant de la seconde branche de refroidissement.

De manière avantageuse, la sortie du liquide de refroidissement hors du carter est facilitée par une chambre de sortie conformée pour recueillir le flux de liquide provenant de la seconde branche de refroidissement et le diriger vers l'orifice de sortie du carter.
- la circulation des gaz recirculés dans l'étage de refroidissement est rectiligne.

De manière avantageuse, la circulation des gaz recirculés au travers de l'étage de refroidissement est rectiligne ou sensiblement pour réduire les pertes de charge à la circulation desdits gaz.
- la circulation de l'air frais compressé dans l'étage de refroidissement est rectiligne.

De manière avantageuse, la circulation de l'air compressé au travers de l'étage de refroidissement est rectiligne ou sensiblement rectiligne pour réduire les pertes de charges de la circulation d'air et faciliter l'obtention de l'étage de refroidissement.
- la circulation de l'air frais compressé est parallèle à la circulation du liquide de refroidissement dans l'étage de refroidissement d'air compressé.

Selon l'invention, la circulation de l'air frais compressé est parallèle à la circulation du liquide de refroidissement dans l'étage de refroidissement d'air compressé afin d'obtenir la meilleure efficacité du refroidissement de l'air compressé, la longueur du parcours de l'air compressé est alors sensiblement égale à la longueur du parcours du liquide de refroidissement et permet donc un échange optimal entre l'air et le liquide.
- la circulation d'air compressé est dans le sens opposé à la circulation du liquide de refroidissement.

Selon l'invention, la circulation de l'air parallèlement et dans le sens opposé à la circulation du liquide de refroidissement dans l'étage de refroidissement permet un refroidissement optimal de l'air compressé de par un coefficient d'échange optimal et une longueur d'échange maximale.
- le carter comprend un orifice d'entrée et un orifice de sortie de liquide de refroidissement agencé à une première extrémité du carter opposée à la seconde extrémité à laquelle est agencée la chambre de répartition.

Selon l'invention, le carter comprend des orifices d'entrée et de sortie de liquide de refroidissement agencés à une extrémité opposée à l'autre extrémité à laquelle est agencée la chambre de répartition formant ainsi un parcours de longueur maximale du liquide de refroidissement dans les deux étages de refroidissement.

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique d'un circuit d'air et de gaz d'un moteur thermique.
[Fig. 2] est une vue schématique d'un carter de refroidissement selon l'invention.
[Fig. 3] est une vue schématique de coupe de dessus du carter de refroidissement.

Dans la description qui va suivre, des chiffres de référence identiques désignent des pièces identiques ou ayant des fonctions similaires.

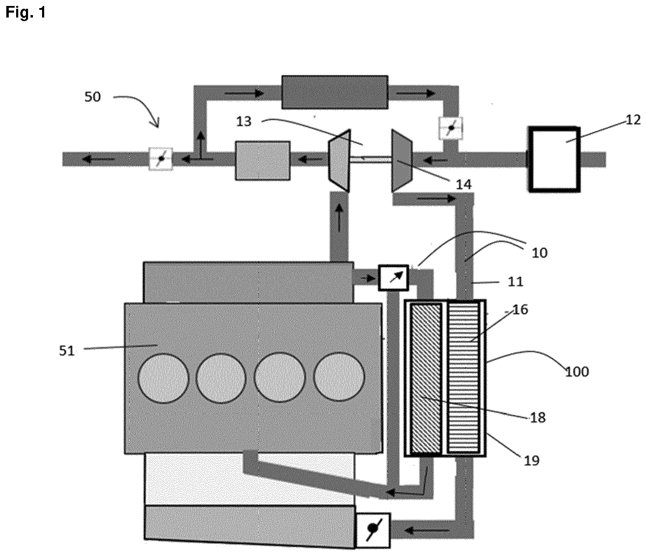

De manière connue, selon la figure 1, un moteur thermique 50 d'un véhicule automobile comprend un circuit d'admission 10 qui amène de l'air frais ou un mélange d'air et de gaz à l'admission du bloc moteur 51. L'air et les gaz sont ensuite introduits dans des chambres de combustion, chaque chambre est délimitée par un cylindre, un toit de chambre défini dans une culasse et un piston coulissant selon l'axe du cylindre.

L'air dit frais est généralement capté depuis la face avant du véhicule automobile. Il est dirigé dans le circuit d'admission d'air frais 11 qui passe successivement par un filtre à air 12, un étage de compression 14 et un refroidisseur 16. L'étage de compression peut être formé par un compresseur électrique ou mécanique, ou un compresseur relié à une turbine, l'ensemble étant connu comme un turbocompresseur 13.

Au passage de l'étage de compression 14, l'air est échauffé. La température peut avoir augmenté de quelques dizaines de degrés (de l'ordre de 50°C) ce qui est susceptible de réduire l'efficacité du moteur.

Pour améliorer le rendement dudit moteur thermique, l'air frais compressé passe dans un étage de refroidissement 16 disposé en amont du bloc moteur, qui est appelé couramment « precooler ». Le « précooler » est formé par un échangeur air-eau.

Dans ledit échangeur 16, l'air circule en contact par exemple dans des tubes logés dans une chambre dans laquelle circule du liquide de refroidissement à base d'eau, provenant d'un circuit de refroidissement du moteur. Le circuit de refroidissement peut passer par exemple au travers du moteur pour refroidir également des parties portées à haute température du moteur comme le carter-cylindres et la culasse, l'eau de refroidissement se chargeant alors de calories, et puis par un radiateur pour permettre une dépose desdites calories et leur évacuation. La circulation de l'eau de refroidissement est effectuée grâce à une pompe à eau entrainée par le moteur thermique ou par une pompe à eau électrique non représentée.

Pour réduire des rejets de polluants générés par la combustion dans le moteur, il est connu de ramener des gaz brulés depuis l'échappement vers l'admission dudit moteur. Les gaz brulés sont nommés gaz recirculés. Ils sont mélangés avec l'air frais avant l'introduction dans le moteur.

Les gaz brulés peuvent être ramenés depuis l'échappement c'est-à-dire en aval de la combustion dans les cylindres, vers les conduits d'admission du moteur. Ils sont à haute température et nécessitent d'être refroidis avant d'être réintroduits dans l'admission du moteur. On a différents types de gaz brulés recirculés ou gaz EGR pour « Exhaust Gaz Recirculation » :
- des gaz recirculés haute pression prélevés depuis le circuit d'échappement en amont selon le sens d'écoulement des gaz de dispositifs de dépollution comme par exemple un catalyseur ou piège à oxyde d'azote (Nox). De manière générale, ces gaz sont prélevés directement depuis un collecteur d'échappement fixé à une face d'échappement de la culasse et sont envoyés ensuite vers les conduits d'admission ou dans un répartiteur d'admission.
- des gaz brulés recirculés basse pression prélevés dans le circuit d'échappement et de manière connue après un dispositif de dépollution. Les gaz brulés recirculés basse pression sont donc prélevés en aval d'un dispositif d'échappement et renvoyés vers l'admission du moteur

Les gaz recirculés sont à haute température et nécessitent donc d'être refroidis avant leur introduction dans le moteur. Ils passent par un refroidisseur de gaz recirculés 18.

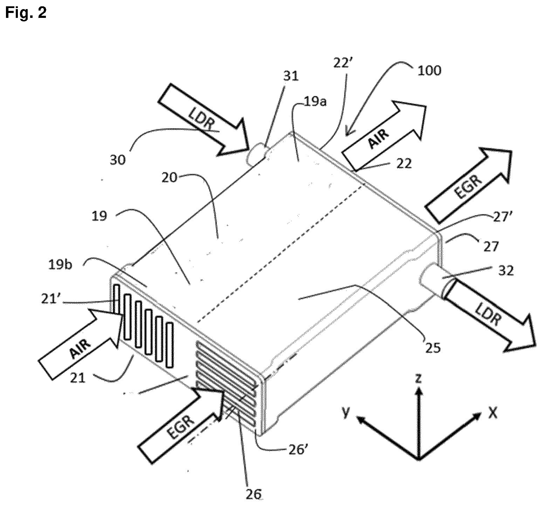

L'invention propose de regrouper l'échangeur 16 d'air compressé avec l'échangeur 18 de gaz recirculés dans une unité de refroidissement 100 comprenant un seul carter de refroidissement 19 comme représenté en figure 2.

Le carter de refroidissement comprend donc :
- un circuit 30 de liquide de refroidissement avec un orifice d'entrée 31 et un orifice de sortie 32, qui sont connectées de manière préférentielle au circuit de refroidissement du moteur 50. Les deux orifices 31,32 sont agencés à une même première extrémité 19a du carter 19.
- un étage de refroidissement 20 de l'air compressé avec une entrée d'air 21 et une sortie d'air 22 diamétralement opposées. Le carter de refroidissement 19 est sensiblement de forme parallélépipédique, l'entrée d'air 21 est par exemple par une face latérale 21' et la sortie d'air 22 est par la face latérale 22' opposée.

De manière préférentielle, le parcours de l'air compressé dans l'étage de refroidissement 20 est rectiligne pour réduire les pertes de charge à la circulation de l'air compressé. L'air compressé peut être dirigé dans des conduits de passage tubulaires et rectilignes qui joignent l'entrée d'air 21' à la sortie d'air 22'.
- un étage de refroidissement de gaz recirculés 25 avec une entrée 26 et une sortie 27 desdits gaz diamétralement opposées.

De manière préférentielle, le parcours des gaz recirculés dans l'étage de refroidissement 25 est rectiligne et selon la plus grande dimension du parallélépipède du carter 19. L'entrée des gaz recirculés 26 est par exemple par une face latérale 26' et la sortie des gaz 27 est par la face latérale 27' opposée. Les gaz recirculés sont dirigés dans des conduits de passage tubulaires et rectilignes qui joignent l'entrée des gaz 26 à la sortie d'air 27 selon la plus grande dimension du carter 19.

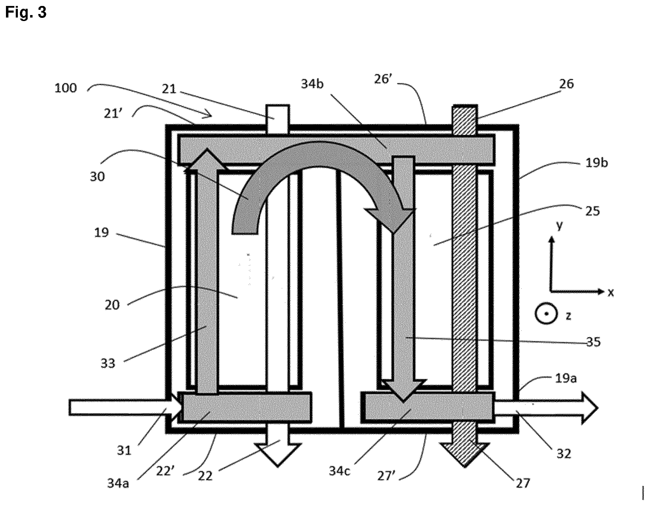

Selon la figure 3, le circuit 30 du liquide de refroidissement à l'intérieur du carter 19 présente une forme de U.

Un orifice d'entrée 31 de liquide est implanté à une première extrémité 19a du carter. Ledit orifice est prolongé vers l'extérieur du carter pour un embout d'entrée connecté au circuit de refroidissement du moteur. Ledit orifice d'entrée 31 débouche à l'intérieur du carter dans une chambre d'entrée 34a conformée pour permettre l'arrosage optimal d'une première branche 33 de refroidissement. Ladite chambre d'entrée peut comprendre par exemple une courbure ou un déflecteur pour diriger le liquide de refroidissement selon l'axe de la première branche 33. Ladite première branche 33 de refroidissement s'étend depuis la première extrémité 19a du carter vers la seconde extrémité 19b opposée selon la plus grande dimension du carter 19. La première branche 33 débouche dans une chambre de répartition 34b qui s'étend transversalement à la première branche 33. Ladite chambre de répartition est disposée à la seconde extrémité 19b opposée du carter 19. La chambre de répartition est conformée pour recueillir le liquide et homogénéiser sensiblement les caractéristiques du liquide avant de repartir dans une seconde branche 35 de refroidissement. Ladite chambre de répartition présente également une courbure ou un déflecteur pour diriger le liquide de refroidissement vers la seconde branche de refroidissement, notamment selon l'axe de la seconde branche 35, permettant l'arrosage de la seconde branche de refroidissement.

Selon l'invention, ladite chambre de répartition est constituée des portions consécutives suivantes, selon le sens d'écoulement du liquide de refroidissement :
- une première portion de recueil avec par exemple une réduction de la section de passage de fluide pour former un convergent,
- une deuxième portion transversale présentant une section de passage constante de fluide
- et une troisième portion de diffusion avec par exemple un accroissement de la section de passage. Lesdites trois portions permettent d'éviter une recirculation du liquide et d'améliorer la circulation du liquide en évitant des zones de vitesse nulle dudit liquide.

La seconde branche 35 de refroidissement est parallèle à la première branche 33. Le liquide de refroidissement circule dans cette seconde branche 35 dans le sens opposé que dans la première branche 33, depuis la chambre de répartition 34b jusqu'à une chambre de sortie 34c qui est connectée avec l'orifice de sortie 32, retournant alors vers la première extrémité 19a du carter 19.

La chambre de sortie 34c est également conformée pour recueillir le liquide arrivant de la seconde branche et le diriger vers l'orifice de sortie 32. Pour ce faire, ladite chambre de sortie comporte une courbure ou un déflecteur pour diriger le flux de liquide de refroidissement.

Il est à noter que les courbures des chambres d'entrée 34a, chambre de répartition 34b et chambre de sortie 34c sont toutes dirigées vers l'intérieur du carter.

Chacune desdites première et seconde branches 33, 35 peut être une chambre longitudinale dans laquelle sont baignés les conduits respectivement d'air compressé et de gaz recirculés.

Selon un mode de réalisation préféré de l'invention, l'étage de refroidissement des gaz recirculés 25 est disposé en aval selon le sens de circulation du liquide de refroidissement, de l'étage de refroidissement d'air compressé 20.

De cette manière, le liquide de refroidissement passe en premier dans l'étage de refroidissement d'air compressé 20 et n'est donc pas chauffé par des échanges avec les gaz recirculés. Les différences de températures entre le liquide de refroidissement et l'air compressé reste donc suffisant pour avoir un échange important de chaleur.

Les conduits ou tubes de passages des gaz recirculés dans l'étage de refroidissement desdits gaz sont parallèles à la seconde branche 35 de circulation de liquide de refroidissement. Le sens de circulation des gaz recirculés est le même que le sens de circulation du liquide de refroidissement c'est-à-dire depuis la seconde extrémité 19b vers le première extrémité 19a du carter 19 selon la grande dimension. La circulation des gaz recirculés 28 est donc parallèle et dans le même sens que la circulation de liquide de refroidissement dans la seconde branche 35. De cette manière astucieuse, les échanges de chaleur entre les gaz recirculés et le liquide de refroidissement sont moins importants, ce qui réduit les risques d'ébullition dudit liquide. La circulation des gaz recirculés par rapport au liquide de refroidissement est nommée « co-flow » en anglais ou dans le sens du courant.

Les conduits ou tubes de passage d'air compressés sont parallèles à la première branche de circulation de liquide 33. Toutefois, l'air compressé circule en sens contraire que le liquide dans ladite première branche, c'est-à-dire que, l'air compressé circule depuis la seconde extrémité 19b vers la première extrémité 19a du carter, tandis que le liquide circule depuis la première extrémité 19a vers la seconde extrémité 19b opposée. La circulation d'air compressé 23 est donc parallèle et en sens contraire à la circulation de liquide de refroidissement dans la première branche 33. Le coefficient d'échange de chaleur est ainsi plus important ce qui permet un refroidissement optimal de l'air compressé. La circulation d'air compressé par rapport à celle du liquide est nommée « counter-flow » en anglais ou à contre-courant.

L'objectif est atteint : l'unité de refroidissement 100 avec le carter 19 logeant les deux étages de refroidissement 20,25 respectivement d'air compressé et de gaz recirculés est compact et permet d'éviter des risques d'ébullition du liquide de refroidissement tout en proposant un refroidissement optimal de l'air compressé et des gaz recirculés de façon indépendante l'un de l'autre.

## Revendications

1. Moteur thermique (50) de véhicule automobile comprenant :
- un bloc moteur (51),
- un circuit d'admission d'air (10) comportant une unité de refroidissement (100) comprenant un seul carter de refroidissement (19) dans lequel circule du liquide de refroidissement et qui est apte à loger :
- un étage de refroidissement (20) d'air frais,
- un étage de refroidissement (25) de gaz recirculés haute pression,
dans lequel le parcours du liquide dans le carter comprend deux branches de circulation (33,35) parallèles et de sens opposé, une des deux branches étant parallèle et de même sens avec une circulation (28) des gaz recirculés dans l'étage de refroidissement des gaz recirculés (25), la circulation de l'air frais compressé (23) est parallèle à la circulation du liquide de refroidissement (33) dans l'étage de refroidissement d'air compressé, la circulation d'air compressé (23) est dans le sens opposé à la circulation du liquide de refroidissement (33) dans l'étage de refroidissement (20), **caractérisé en ce que** le carter (19) comprend un orifice d'entrée (31) et
un orifice de sortie (32) de liquide de refroidissement agencé à une première extrémité (19a) du carter opposée à une seconde extrémité (19b) à laquelle est agencée une chambre de répartition (34b), ladite chambre de répartition étant notamment constituée des portions consécutives suivantes, selon le sens d'écoulement du liquide de refroidissement :
- une première portion de recueil comportant notamment une réduction de la section de passage de fluide pour former un convergent,
- une deuxième portion transversale présentant une section de passage constante de fluide, et
- une troisième portion de diffusion comportant notamment un accroissement de la section de passage.

2. Moteur (50) selon la revendication 1, **caractérisé en ce que** la circulation du liquide de refroidissement (33,35) passe consécutivement d'un premier étage de refroidissement (20) au second étage de refroidissement (25).

3. Moteur (50) selon la revendication 1 ou 2, **caractérisé en ce que** l'étage de refroidissement des gaz recirculés (25) est disposé en aval de l'étage de refroidissement de l'air compressé (20) selon le sens d'écoulement du liquide de refroidissement dans le carter.

4. Moteur (50) selon l'une quelconque des revendications 1 à 3, **caractérisé en ce que** la première branche de refroidissement (33) de l'air compressé est connectée à la seconde branche de refroidissement (35) des gaz recirculés par une chambre intermédiaire de répartition (34b).

5. Moteur (50) selon l'une quelconque des revendications 2 à 4, **caractérisé en ce que** la première branche de refroidissement (33) de l'air compressé est connectée à une chambre d'entrée (34a) conformée pour arroser la première branche.

6. Moteur (50) selon l'une quelconque des revendications 2 à 5, **caractérisé en ce que** la seconde branche de refroidissement (35) de gaz recirculés est connectée à une chambre de sortie (34c) conformée pour recueillir et diriger vers la sortie (32) le flux de liquide provenant de la seconde branche (35) de refroidissement.

7. Moteur (50) selon l'une quelconque des revendications 1 à 6, **caractérisé en ce que** la circulation (28) des gaz recirculés dans l'étage de refroidissement (25) est rectiligne.

8. Moteur (50) selon l'une quelconque des revendications 1 à 7, **caractérisé en ce que** la circulation de l'air frais compressé (23) dans l'étage de refroidissement (20) est rectiligne.

## Patentansprüche

1. Verbrennungsmotor (50) eines Kraftfahrzeugs, umfassend:
- einen Motorgetriebeblock (51),
- einen Luftansaugkreislauf (10), der eine Kühleinheit (100) aufweist, umfassend ein einzelnes Kühlgehäuse (19), in dem eine Kühlflüssigkeit zirkuliert und das geeignet ist, Folgendes aufzunehmen:
- eine Frischluftkühlstufe (20),
- eine Kühlstufe (25) für rezirkulierte Hochdruckgase,
wobei der Weg der Flüssigkeit in dem Gehäuse zwei Zirkulationszweige (33, 35) umfasst, die parallel und in entgegengesetzter Richtung verlaufen, wobei einer der zwei Zweige parallel und in derselben Richtung mit einer Zirkulation (28) der bei der Kühlungsstufe (25) rezirkulierten Gase verläuft, wobei die Zirkulation der frischen Druckluft (23) parallel zu der Zirkulation der Kühlflüssigkeit (33) in der Druckluftkühlstufe erfolgt, die Zirkulation der Druckluft (23) in der entgegengesetzten Richtung zu der Zirkulation der Kühlflüssigkeit (33) in der Kühlstufe (20) verläuft, **dadurch gekennzeichnet, dass** das Gehäuse (19) eine Kühlflüssigkeitseinlassöffnung (31) und eine -auslassöffnung (32) umfasst, die an einem ersten Ende (19a) des Gehäuses gegenüber einem zweiten Ende (19b) angeordnet ist, an dem eine Verteilungskammer (34b) angeordnet ist, wobei die Verteilungskammer insbesondere aus Teilen besteht, die entlang der Strömungsrichtung der Kühlflüssigkeit aufeinander folgen:
- einen ersten Sammelteil, der insbesondere eine Verringerung des Fluiddurchgangsabschnitts zum Ausbilden einer Konvergenz aufweist,
- einen zweiten Querteil, der einen Abschnitt für konstanten Fluiddurchgang vorweist, und
- einen dritten Diffusionsteil, der insbesondere eine Vergrößerung des Durchgangsabschnitts aufweist.

2. Motor (50) nach Anspruch 1, **dadurch gekennzeichnet, dass** die Zirkulation der Kühlflüssigkeit (33,35) von einer ersten Kühlstufe (20) zu der zweiten Kühlstufe (25) nacheinander erfolgt.

3. Motor (50) nach Anspruch 1 oder 2, **dadurch gekennzeichnet, dass** die Kühlstufe (25) für rezirkulierte Gase stromabwärtig der Druckluftkühlstufe (20) entlang der Strömungsrichtung der Kühlflüssigkeit in dem Gehäuse angeordnet ist.

4. Motor (50) nach einem der Ansprüche 1 bis 3,
**dadurch gekennzeichnet, dass** der erste Kühlzweig (33) der Druckluft durch eine Zwischenverteilungskammer (34b) mit dem zweiten Kühlzweig (35) der rezirkulierten Gase verbunden ist.

5. Motor (50) nach einem der Ansprüche 2 bis 4,
**dadurch gekennzeichnet, dass** der erste Kühlzweig (33) der Druckluft mit einer Einlasskammer (34a) verbunden ist, die angepasst ist, um den ersten Zweig zu benetzen.

6. Motor (50) nach einem der Ansprüche 2 bis 5,
**dadurch gekennzeichnet, dass** der zweite Kühlzweig (35) der rezirkulierten Gase mit einer Auslasskammer (34c) verbunden ist, die angepasst ist, um den von dem zweiten Kühlzweig (35) stammenden Flüssigkeitsstrom zu sammeln und zu dem Auslass (32) zu leiten.

7. Motor (50) nach einem der Ansprüche 1 bis 6,
**dadurch gekennzeichnet, dass** die Zirkulation (28) der in der Kühlstufe (25) rezirkulierten Gase geradlinig ist.

8. Motor (50) nach einem der Ansprüche 1 bis 7,
**dadurch gekennzeichnet, dass** die Zirkulation der frischen Druckluft (23) in der Kühlstufe (20) geradlinig ist.

## Claims

1. Heat engine (50) for a motor vehicle comprising:
- an engine block (51),
- an air intake circuit (10) having a cooling unit (100) comprising a single cooling housing (19) in which coolant circulates and which is suitable for housing:
- a fresh air cooling stage (20),
- a high-pressure recirculated gas cooling stage (25),
wherein the liquid path in the housing comprises two parallel and oppositely directed circulation branches (33,35), one of the two branches being parallel and co-directional with a circulation (28) of the recirculated gases in the recirculated gas cooling stage (25), the circulation of the compressed fresh air (23) is parallel to the circulation of the coolant (33) in the compressed air cooling stage, and the circulation of compressed air (23) is in the opposite direction to the circulation of the coolant (33) in the cooling stage (20), **characterized in that** the housing (19) comprises a coolant inlet port (31) and
a coolant outlet port (32) arranged at a first end (19a) of the housing opposite a second end (19b) at which a distribution chamber (34b) is arranged, said distribution chamber consisting in particular of the following consecutive portions, according to the direction of flow of the coolant:
- a first collection portion having in particular a reduction of the fluid passage cross-section to form a convergent region,
- a second transverse portion with a constant fluid passage cross-section, and
- a third diffusion portion having in particular an increase in the passage cross-section.

2. Engine (50) according to claim 1, **characterized in that** the circulation of the coolant (33,35) passes consecutively from a first cooling stage (20) to the second cooling stage (25).

3. Engine (50) according to claim 1 or 2, **characterized in that** the recirculated gas cooling stage (25) is arranged downstream of the compressed air cooling stage (20) in the direction of flow of the coolant in the housing.

4. Engine (50) according to any of claims 1 to 3, **characterized in that** the first cooling branch (33) for the compressed air is connected to the second cooling branch (35) for the recirculated gases by an intermediate distribution chamber (34b).

5. Engine (50) according to any of claims 2 to 4, **characterized in that** the first cooling branch (33) for the compressed air is connected to an inlet chamber (34a) configured to wet the first branch.

6. Engine (50) according to any of claims 2 to 5, **characterized in that** the second cooling branch (35) for recirculated gases is connected to an outlet chamber (34c) configured to collect the flow of liquid coming from the second cooling branch (35) and direct it towards the outlet (32).

7. Engine (50) according to any of claims 1 to 6, **characterized in that** the circulation (28) of the recirculated gases in the cooling stage (25) is rectilinear.

8. Engine (50) according to any of claims 1 to 7, **characterized in that** the circulation of the compressed fresh air (23) in the cooling stage (20) is rectilinear.
